# EUROPÄISCHE PATENTSCHRIFT

(11) **EP 0 702 181 B1**
(45) Veröffentlichungstag und Bekanntmachung des Hinweises auf die Patenterteilung: **02.05.2002**
(21) Anmeldenummer: 95810476.2
(22) Anmeldetag: 21.07.1995
(51) Int. Cl.: F16L 3/04, F16L 3/22

(54) **Rohr- und Kabelschelle mit Fussteil und Aufnahmebügel**
Pipe or cable clamp with base and receptacle
Collier de serrage pour tuyaux ou câbles avec une partie de base et dispositif de logement

(30) Priorität: 15.09.1994 DE 4432781
(43) Veröffentlichungstag der Anmeldung: 20.03.1996
(73) Patentinhaber: HILTI Aktiengesellschaft, 9494 Schaan (LI)
(72) Erfinder: Janssen, Rupert, A-6812 Meiningen (AT); Guillon, Luc, CH-9468 Sax (CH); Fröwis, Markus, A-6820 Frastanz (AT)
(74) Vertreter: Wildi, Roland

(56) Entgegenhaltungen:
- DE-A- 4 130 011
- GB-A- 560 514
- GB-A- 884 124
- GB-A- 1 584 735
- US-A- 2 893 671
- US-A- 3 584 348

## Beschreibung

Die Erfindung betrifft eine Rohr- und Kabelschelle mit einem Fussteil zum Festlegen an einem Bauteil und einem vom Fussteil abragenden, bogenförmig ausgebildeten, elastisch aufweitbaren Aufnahmebügel.

Rohr- und Kabelschellen der in Rede stehenden Art dienen der Befestigung von Rohren und Kabeln an Bauteilen. Während die Rohre Installationen verschiedener Art dienen, kann es sich bei Kabeln um Elektrokabel und dergleichen handeln.

Die Rohre und Kabel treten in unterschiedlichen Durchmessem auf, was bei der Befestigung zu berücksichtigen ist. Da die Rohr- und Kabelschellen in der Regel aus elastischem Material, beispielsweise Kunststoff bestehen, können bestimmte Variationen im Durchmesser über die Elastizität erfasst werden. Reicht die Elastizität zum Abdecken der Durchmesserunterschiede nicht mehr aus, entstehen insbesondere wirtschaftliche Nachteile, indem schon bei der Herstellung unterschiedliche Werkzeuge zur Verfügung gestellt werden müssen und darüber hinaus beim Hersteller und beim Anwender die Lagerhaltung äusserst umfangreich wird.

Zur Behebung der Nachteile hinsichtlich Durchmesservariation ist aus der DE-PS 26 33 528 eine Rohr- und Kabelschelle bekannt, die in verschiedenen Neigungslagen am Bauteil festlegbar ist. Zu diesem Zweck weist ein Fusstell, von welchem ein Aufnahmebügel abragt, eine geneigte Auflagefläche auf. Dank dieser geneigten Auflagefläche kann die Rohr- und Kabelschelle in verschiedenen Neigungslagen am Bauteil festgelegt werden. Darüber hinaus wird auch bei dieser bekannten Rohr- und Kabelschelle die Elastizität des Aufnahmebügels ausgenutzt.

Problematisch ist bei dieser bekannten Rohr- und Käbelschelle die Montage zum Festlegen am Bauteil, da aufgrund der geneigten Auflagefläche in den meisten Fällen keine stabile Lage vorherrscht. Somit kann es zu unzureichenden Festlegungen kommen, indem Befestigungselemente in Form von Nägeln oder dergleichen derart schräg in das Bauteil eingetrieben werden, dass sie keinen ausreichenden Halt finden.

Darüber hinaus wird aufgrund der undefinierten Lage bei der Montage relativ viel Erfahrung vom Montagepersonal gefordert.

Aus der US-A-3 584 348 ist eine Rohr- und Kabelschelle bekannt, mit der zwei Rohre oder zwei Kabel an einem Bauteil befestigt werden können. Die Rohr- und Kabelschelle ist mit einem zentralen Fussteil, an einem Bauteil festlegbar. Von zwei einander gegenüberliegenden Seiten des Fussteiles ragen jeweils zwei, einen Aufnahmeraum für das Rohr bzw. Kabel bildende, bogenförmig ausgebildete Aufnahmebügel und ein Federarm seitlich ab. Der Federarm ist in einer Aussparung des den betreffenden Aufnahmeraum bildenden Teiles des Aufnahmebügels angeordnet, entlang einer senkrecht zur Zentralachse des Aufnahmeraumes liegenden Ebene federbar und ragt im entspannten Zustand teilweise in den Aufnahmeraum. Die freien Enden der beiden Aufnahmebügel sind als nach aussen hin abgebogene Lippen ausgebildet.

Der Erfindung liegt die Aufgabe zugrunde, eine Rohr- und Kabelschelle zu schaffen, die in einfacher Weise an einem Bauteil festlegbar ist und sich zudem zur Befestigung von Rohren und Kabeln unterschiedlicher Durchmesser eignet.

Erfindungsgemäss wird die Aufgabe dadurch gelöst, dass ein freies Ende des Aufnahmebügels sowie das Fussteil in der gleichen Ebene liegen und der Aufnahmebügel zwei Aufnahmeräume bildet, die zwischen dem Fussteil und dem freien, Ende des Aufnahmebügels nebeneinander angeordnet sind, wobei der Federarm in den dem Fussteil benachbarten Aufnahmeraum ragt.

Bei der Befestigung von Rohren und Kabeln grösserer Durchmesser wird vor allem die Elastizität des Aufnahmebügels ausgenutzt, indem dieser aufgeweitet und gegenüber dem Fussteil gebogen wird, so dass sich der Aufnahmeraum vergrössert. Diese Verformung erfolgt beim Festlegen des Fussteiles am Bauteil, wobei dank der Elastizität des Anwendung findenden Materials für die Röhr- und Kabelschelle, wie beispielsweise Kunststoff, die Rohre und Kabel ausreichend gegen das Bauteil gespannt werden. In der Variation des Durchmessers nach unten wird die Begrenzung durch Aufstehen des freien Endes des Aufnahmebügels auf dem Bauteil durch Anordnung des erfindungsgemässen Federarmes aufgehoben. Dieser Federarm spannt das zu befestigende Rohr und Kabel selbst dann ausreichend gegen das Bauteil, wenn das freie Ende des Aufnahmebügels auf dem Bauteil aufsteht. Damit kann in der Variation des Durchmessers wesentlich weiter nach unten gegangen werden.

Der Federarm ist in einer Aussparung des den betreffenden Aufnahmeraum bildenden Teiles des Aufnahmebügels angeordnet.

Bei Installationen kommt es häufig vor, dass mehrere Rohre und Kabel nebeneinander an Bauteilen zu befestigen sind. Zu diesem Zwecke sind Rohr- und Kabelschellen bekannt, welche in Richtung abragend vom Fussteil hintereinander mehrere Aufnahmeräume, insbesondere zwei, aufweisen. Vor allem bei dieser bevorzugten Verwendung von Rohr- und Kabelschellen mit zwei Aufnahmeräumen besteht die Gefahr, dass das näher beim Fussteil liegende Rohr und Kabel nicht mehr ausreichend gegen das Bauteil gespannt wird, wenn das aussenliegende Rohr und Kabel im Durchmesser zu gross ist. Um diesem häufig auftretenden Nachteil zu begegnen, wird gemäss einer weiteren Ausführungsform der Erfindung vorgeschlagen, zwei hintereinander angeordnete, vom Fussteil abragende Aufnahmeräume vorzusehen, wobei der Federarm In den dem Fussteil benachbarten Aufnahmeraum ragt. Dieser in den dem Fussteil benachbarten Aufnahmeraum ragende Federarm stellt eine ausreichende Spannung des diesen Aufnahmeraum durchsetzenden Rohres und Kabels sicher, selbst wenn das äussere Rohr und Kabel durchmessermässig nicht ausreichend abgestimmt ist.

Zweckmässigerweise ist der Federarm bogenförmig ausgebildet und erstreckt sich entlang dem 0,5- bis 0,8-fachen Bogenmass des den betreffenden Aufnahmeraum bildenden Teiles des Aufnahmebügels. Damit ist gewährleistet, dass das zu befestigende Rohr und Kabel ausreichend gegen das Bauteil gespannt wird.

Die Halterung der Rohre und Kabel, insbesondere in Richtung parallel zur Zentralachse des Aufnahmeraumes kann durch einen gewissen Anteil an formschlüssiger Wirkung verbessert werden. Eine solche formschlüssige Wirkung kann durch hohe spezifische Flächenpressung herbeigeführt werden, was zweckmässigerweise dadurch erfolgt, dass der Federarm entlang wenigstens eines Teiles seiner Länge eine in den Aufnahmeraum ragende Rippe aufweist, die entlang einer senkrecht zur Zentralachse des Aufnahmeraumes liegenden Ebene verläuft.

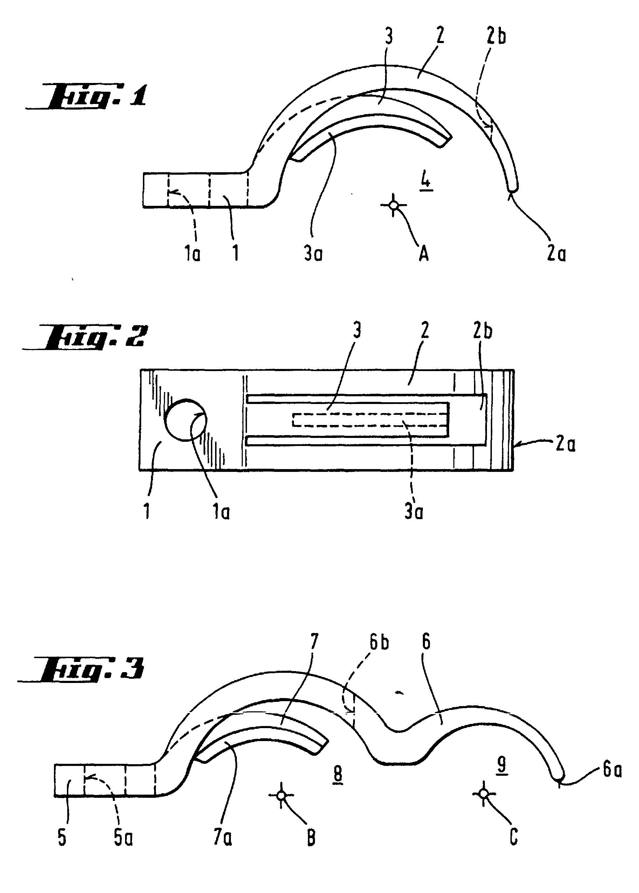

Die Erfindung wird nachstehend anhand von Figur 3 beispielhaft erläutert. Die Auführungsformen gemäß Figur 1 und Figur 2 gehören nicht zur Erfindung. Es zeigen:
Fig. 1 eine Rohr- und Kabelschelle in Seitenansicht;
Fig. 2 eine Draufsicht auf die Rohr- und Kabelschelle der Fig. 1;
Fig. 3 eine Ausführungsform der erfindungsgemässen Rohr- und Kabelschelle in Seitenansicht.

Die Figuren 1 und 2 zeigen eine Rohr- und Kabelschelle mit Fussteil 1 und Aufnahmebügel 2. Zum Festlegen des Fussteiles 1 an einem zeichnerisch nicht dargestellten Bauteil ist eine Bohrung 1a vorgesehen, welche der Durchführung eines Befestigungselementes in Form eine Nagels, Dübels oder dergleichen dient. Anstelle der Verwendung eines solchen Befestigungselementes ist eine Festlegung auch durch Kleben, Schweissen oder formschlüssiges Verbinden in entsprechenden Ausnehmungen im Bauteil möglich.

Wie die Figur 1 ferner zeigt, umschliesst der Aufnahmebügel 2 einen Aufnahmeraum 4, der von einer Zentralachse A durchsetzt ist. Begrenzt wird der Aufnahmeraum 4 auf der einen Seite vom Fussteil 1 und auf der anderen Seite vom freien Ende 2a des Aufnahmebügels 2. Vom Fussteil 1 ragt ein Federarm 3. in der Weise ab, dass er in entspanntem Zustand in den Aufnahmeraum 4 ragt. Zum Aufnahmeraum 4 hin weist der Federarm 3 eine Rippe 3a auf, welche entlang einer senkrecht zur Zentralachse A stehenden Ebene verläuft.

Figur 2 zeigt, wie der Federarm 3 innerhalb einer Aussparung 2b des Aufnahmebügels 2 angeordnet ist. Darüber hinaus lässt sich dieser Figur der Verlauf der Rippe 3a entnehmen.

Aus Figur 3 ist eine Rohr- und Kabelschelle mit Fussteil 5 und Aufnahmebügel 6 ersichtlich. Der Aufnahmebügel 6 mit freiem Ende 6a ist derart ausgebildet, dass abragend vom Fussteil 5 hintereinander zwei Aufnahmeräume 8, 9 gebildet sind. Zum Aufnahmeraum 8 verläuft senkrecht die Zentralachse B und zum Aufnahmeraum 9 ebenfalls senkrecht die Zentralachse C.

Zum Festlegen des Fussteiles 5 in vorerwähnter Weise ist beispielhaft eine Durchgangsbohrung 5a vorgesehen. Zudem ragt vom Fussteil 5 innerhalb einer Aussparung 6b des Aufnahmebügels 6 ein Federarm 7 derart ab, dass er in entspanntem Zustand in den Aufnahmeraum 8 ragt. Zu diesem Aufnahmeraum 8 hin ist am Federarm 7 eine Rippe 7a angeordnet, welche entlang einer senkrecht zur Zentralachse B liegenden Ebene verläuft.

Als Material für die Rohr- und Kabelschelle gemäss beiden Ausführungsbeispielen kommt elastisches Material zur Anwendung, wobei sich insbesondere ein Kunststoff eignet.

## Patentansprüche

1. Rohr- und Kabelschelle mit einem Fussteil (5) zum Festlegen an einem Bauteil und einem vom Fussteil (5) abragenden, bogenförmig ausgebildeten, elastisch aufweitbaren Aufnahmebügel (6), der zwei Aufnahmeräume (8, 9) für Rohre und Kabel bildet, mit einem in der gleichen Ebene wie das Fussteil angeordneten freien Ende (6a), einem vom Fussteil (5) abragenden Federarm (7), der in den dem Fussteil benachbarten Aufnahmeraum (8) ragt der entlang einer senkrecht zur Zentralachse (B) des Aufnahmeraumes (8) liegenden Ebene federbar ist, in entspanntem Zustand teilweise in den betreffenden Aufnahmeraum (8) ragt und in einer Aussparung (6b) des den betreffenden Aufnahmeraum (8) bildenden Teiles des Aufnahmebügels (6) angeordnet ist, wobei die zwei Aufnahmeräume (8, 9) zwischen dem Fussteil (5) und dem freien Ende (2a) des Aufnahmebügels (6) nebeneinander angeordnet sind.

2. Rohr- und Kabelschelle nach Anspruch 1, **dadurch gekennzeichnet, dass** der Federarm (7) sich entlang dem 0,5- bis 0,8-fachen Bogenmass das den betreffenden Aufnahmeraum (8) bildenden Teiles des Aufnahmebügels (6) erstreckt.

3. Rohr- und Kabelschelle nach Anspruch 1 oder 2, **dadurch gekennzeichnet, dass** der Federam (7) entlang wenigstens eines Teiles seiner Länge eine in den Aufnahmeraum (8) ragende Rippe (7a) aufweist, die entlang der senkrecht zur Zentralachse (B) des Aufnahmeraumes (8) liegenden Ebene verläuft.

## Claims

1. Pipe and cable clamp, comprising a base section (5) for fixing to an assembly component, and an arc shaped and elastically expandable receiving arm (6) which protrudes from the base section (5) and forms two receiving areas (8, 9) for pipes and cables, with a free end (6a) arranged in the same plane as the base section, a spring arm (7) which protrudes from the base section (5) and projects into the receiving area (8) adjacent the base section and which is sprung along a plane vertically to the central axis (B) of the receiving area (8) and in its released state partially protrudes into the respective receiving area (8) and which is arranged in a cutout (6b) of the part of the receiving arm (6) which forms the receiving area (8), and the two receiving areas (8, 9) are arranged alongside each other between the base section (5) and the free end (2a) of the receiving arm (6).

2. Pipe and cable clamp according to Claim 1, **characterised in that** the spring arm (7) extends along 0.5 to 0.8 times the arc dimension of the part of the receiving arm (6) which forms the respective receiving area (8).

3. Pipe and cable clamp according to Claim 1 or 2, **characterised in that** the spring arm (7) comprises along at least a portion of its length a web (7a) which protrudes into the receiving area (8) and extends along the plane vertically to the central axis (B) of the receiving area (8).

## Revendications

1. Collier pour tubes et pour câbles avec une partie de pied (5) pour la fixation sur un élément structurel et avec un étrier récepteur déployable élastiquement (6) de conception arquée qui dépasse de la partie de pied (5) et qui forme deux espaces de retenue (8, 9) pour des tubes et des câbles, avec une extrémité libre (6a) disposée dans le même plan que la partie de pied, avec un bras élastique (7), lequel dépasse de la partie de pied (5), fait saillie dans l'espace de retenue (8) voisin de la partie de pied, est élastique suivant un plan orienté perpendiculairement à l'axe central (B) de l'espace de retenue (8), à l'état relâché pénètre partiellement dans l'espace de retenue concerné (8) et est disposé dans un évidement (6b) de la partie de l'étrier récepteur (6) formant l'espace de retenue concerné (8), les deux espaces de retenue (8, 9) étant disposés côte à côte entre la partie de pied (5) et l'extrémité libre (2a) de l'étrier récepteur (6).

2. Collier pour tubes et pour câbles selon la revendication 1, **caractérisé en ce que** le bras élastique (7) s'étend sur 0,5 à 0,8 fois la mesure d'arc de la partie de l'étrier récepteur (6) formant l'espace de retenue concerné (8).

3. Collier pour tubes et pour câbles selon la revendication 1 ou 2, **caractérisé en ce que** le bras élastique (7) comporte, le long d'au moins une partie de sa longueur, une nervure (7a) qui dépasse dans l'espace de retenue (8) et qui s'étend le long du plan orienté perpendiculairement à l'axe central (B) de l'espace de retenue (8).
